# EUROPEAN PATENT SPECIFICATION

(11) **EP 2 104 630 B1**
(45) Date of publication and mention of the grant of the patent: **11.04.2012**
(21) Application number: 07848837.6
(22) Date of filing: 29.10.2007
(51) Int. Cl.: B65B 47/04

(54) **PRINT CENTRING APPARATUS AND METHOD**
DRUCKZENTRIERUNGSVORRICHTUNG UND -VERFAHREN
DISPOSITIF ET PROCÉDÉ DE CENTRAGE D'IMPRESSION

(30) Priority: 30.10.2006 IT MO20060349
(43) Date of publication of application: 30.09.2009
(73) Proprietor: Sarong Societa' Per Azioni, 42046 Reggiolo (RE) (IT)
(72) Inventor: FINETTI, Primo, I-41037 Mirandola (MO) (IT); BARTOLI, Andrea, I-42100 Reggio Emilia (RE) (IT)
(74) Representative: Crugnola, Pietro
(86) International application number: PCT/IB2007/003254
(87) International publication number: WO 2008/053313

(56) References cited:
- WO-A-03/041946
- WO-A-03/099541
- FR-A- 2 335 344
- GB-A- 1 296 251

## Description

The invention relates to an apparatus and a method for centring a print, in particular for centring the print during a process of forming cavities for packaging slidable products at least at the moment of packaging, for example pharmaceuticals, or cosmetics, such as suppositories, capsules, or the like.

In thermoforming machines for thermoforming a web of plastics in sheet form centring devices are known that are arranged for correctly positioning a portion of web to be formed inside a forming mould, in such a way that preset zones of a desired portion of web, for example displaying an information message or a decoration, occupy a centred position of an external surface of the formed cavity.

The centring devices of these known machines comprise means for stretching the printed web that acts so as to compensate for incorrect positioning of the above zones when a sensor detects excessive shifts of appropriate print centring notches on the web.

A drawback of the known print centring machines is that the latter can be used only if the printed web is made of a material that is suitable for being stretched, for example plastics.

Printed webs that are made of materials that are not very stretchable, for example webs comprising an aluminium film, cannot be used on known print centring machines as they would tear.

WO 03/041946 discloses an apparatus according to the preamble of claim 1.

An object of the invention is to improve known print centring machines.

A further object is to obtain centring machines that can be used when continuous webs are used that are made of materials that are hardly, or not at all, stretchable.

In a first aspect of the invention an apparatus is provided, comprising accumulating means, for forming a plurality of loops in a web of sheet material such that said sheet material can slide away from said loops during the forming. of cavities, said accumulating means comprising laminar elements movable between a retracted position in which they are outside corresponding cavities and an operating position in which said laminar elements penetrate inside said cavities, characterised in that said accumulating means comprises adjusting means arranged for varying a penetration depth of said knives in said cavity means in said operating position.

In a second aspect of the invention a method is provided, comprising unwinding by steps a web of sheet material from a supplying station, forming a plurality of loops in said web of sheet material so as to define in said material accumulating zones, substantially reducing said loops during the forming of cavities, characterised in that said forming comprises varying a dimension of at least one of said loops in such a way that said accumulating zones can draw a greater or lesser quantity of said sheet material from said supplying station.

The laminar elements are arranged for pushing, during an operating step, the web inside a cavity of cavity means so as to form an accumulation of material inside the latter before a forming step arranged for forming the recesses in the continuous web.

This accumulation of material defines the reserve of material that, during the forming step, is drawn to the forming zone to form the recesses.

In this way it becomes possible to form recesses in belts of hardly drawable material without the latter becoming drawn. This enables the integrity of the material to be preserved and prevents the latter deteriorating, for example tearing. The step of printing the printed decoration on the web may be greater than the forming step with which the forming apparatus performs a forming process on a portion of the continuous web.

In this way a positioning error is generated with respect to a correct position of a further portion of web that is formed in a subsequent forcing process.

If the continuous web is in the correct position the print, at the end of forming, is in a desired position on a surface of the recess.

The positioning error is detected by the sensor means detecting the position of the reference signals of the decoration.

When the detected positioning error is greater than a tolerable error, the adjusting means suitably diminishes the penetration depth of the knives in the cavities during the operating step in such a way that the accumulation of material in the cavities causes the further portion to move so as to return the latter to the correct position.

The adjusting means can thus centre the print with respect to the recesses formed on the web.

In this way the apparatus thus centres the print also on webs made of hardly stretchable materials, inasmuch, during centring, positioning of the further portion in the correct position occurs without the continuous web being stretched. The invention can be better understood and implemented with reference to the attached drawings that illustrate an embodiment thereof by way of non-limiting example, in which:
Figure 1 is a schematic plan view of an apparatus according to an embodiment of the invention;

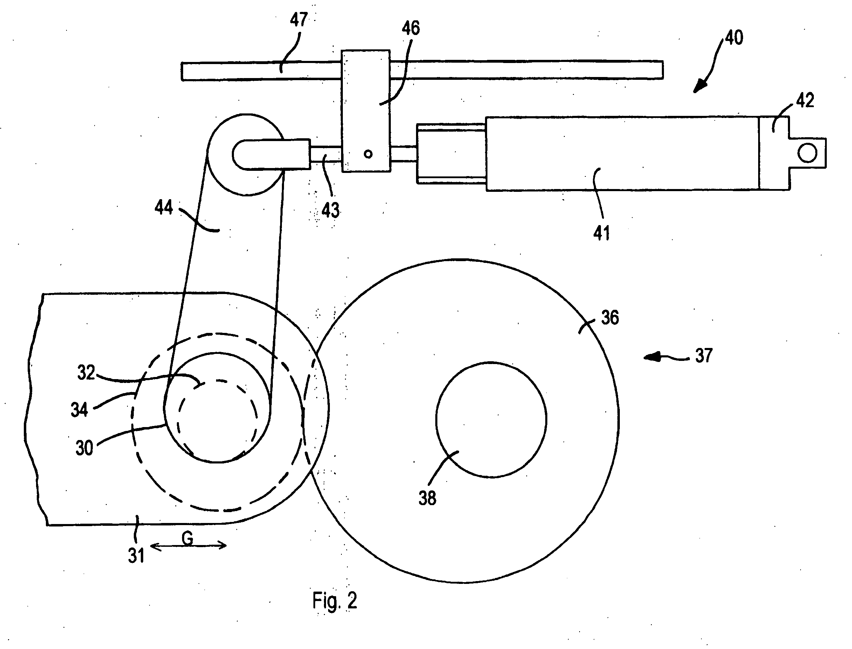

Figure 2 is a schematic section taken along a plane II-II of Figure 1;
Figure 3 is a perspective view of a web made of a non-stretchable material after a reserve-forming step;
Figure 4 is a perspective view of the web in Figure 3 after a forming step;
Figure 5 is a schematic section of forming means during an operating step of a forming process obtained by the apparatus in Figure 1;
Figure 6 is a schematic section of the forming means in Figure 5 during a forming step of a forming process obtained by the apparatus in Figure 1.

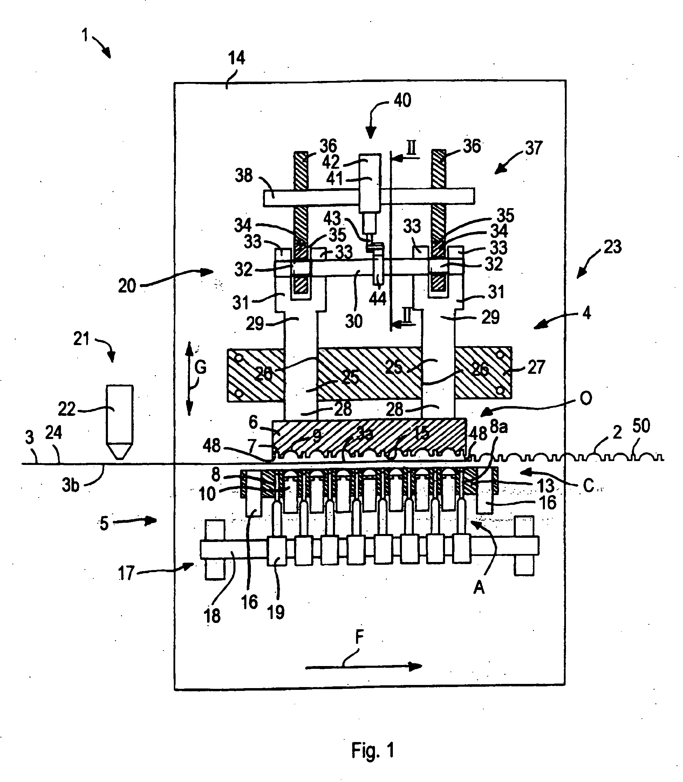

In Figure 1 there is shown an apparatus 1 for forming recesses 2 inside a continuous web 3 of hardly stretchable material.

The apparatus 1 is able to perform print centring during a forming process, in which recesses 2 are formed in a portion 3a of the continuous web 3, such that a print, for example an informative message or a decoration located on the continuous web 3, occupies a preset position of a surface of recesses 2 formed on the continuous web 3.

The continuous web 3 may comprise superimposed films made of various materials, for example a first film that is hardly stretchable made of aluminium and a second film made of weldable plastics.

The recesses 2 formed by the apparatus 1 in the continuous web define a first part of cavities for packaging slidable products such as suppositories, capsules, or the like.

The continuous formed web 3 is welded, in subsequent welding stations, which are not shown, to a further continuous web comprising further cavities defining a second part of each cavity so as to form the cavities that are subsequently filled by filling devices that are now shown with a flowable product to be packaged and closed.

The apparatus comprises forming means 23 arranged for forming the recesses 2 on the continuous web 3.

The forming means 23 comprises cavity means 4 arranged for interacting with punch means 5.

The continuous web 3 is moved by steps in an advance direction F, shown in Figure 1, by actuating means, which is not shown, such that the portion 3a of the continuous web 3 is interposed between the cavity means 4 and the punch means 5 to be formed during the forming process.

The cavity means 4 comprises a block 6 on a front surface 15 of which first forming cavities 7 are received arranged for housing, in an operating step, reserve-forming knives 8, and second forming cavities 9 arranged for housing, in a forming step, punches 10 arranged for forming the recesses 2.

The first forming cavities 7 alternate, in the advance direction F, with the second forming cavities 9.

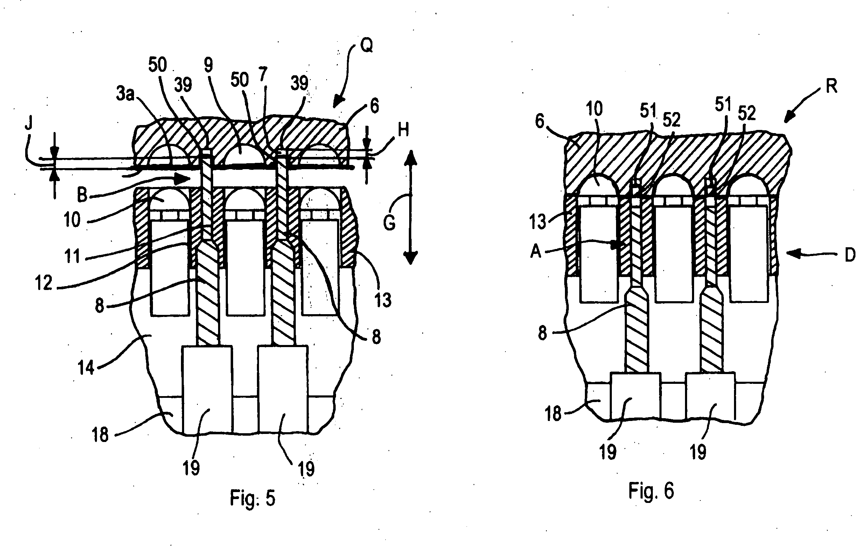

The reserve-forming knives 8 and the punches 10 are respectively housed in seats 11 and further seats 12 made in a body 13, shown in Figures 5 and 6.

The punches 10 are fixed to a base 14 and can slide with respect to the body 13 in a direction G that is substantially normal in relation to the front surface 15, to emerge partially from the latter so as to form the recesses 2.

Each reserve-forming knife 8 can slide with respect to the body 13 and with respect to the base 14 in the direction G, and is movable between a retracted position A, shown in Figure 1, in which the reserve-forming knife 8 is contained in the respective seat 11, and an advanced position B, shown in Figure 5, in which the reserve-forming knife 8 partially emerges from the respective seat 11.

The reserve-forming knives 8 are moved by first cam means 17 comprising a first shaft 18 rotatably fixed to the base 14, on which first cams 19 are mounted.

Each first cam 19 is arranged for pushing a corresponding reserve-forming knife 8 in the advanced position B, moving the latter towards the cavity means 4.

The first shaft 18 is moved by motor means that is not shown.

The cams 19 are arranged in such a way as to move, during part of a rotation of the first shaft 18, the reserve-forming knives 8 one after the other in the advanced position B.

The reserve-forming knives are moved one after the other starting with an end knife 8a and continuing in the opposite direction to the advance direction F, i.e. to feeding means of the continuous web 3.

In a remaining part of the revolution of the first shaft 18, the reserve-forming knives 8, remaining in the advanced position B, are not in contact with the first cams 19 and are free to move in the respective seats 11.

The body 13 is fixed by spring means 16 to the base 14.

The spring means 16 maintains the body 13 in an operating position C, visible in Figure 1, in which the punches 10 are contained inside the further seats 12.

The body 13 can be moved by the block 6, causing compression of the spring means, in a forming position D, shown in Figure 6, in which the punches 10 partially emerge from the further seats 12 and can interact with the portion 3a to form the recesses 2 in the latter.

The apparatus 1 further comprises movement means 20 arranged for moving the block 6.

The movement means 20 comprises two arms 25, arranged for supporting the block 6, slidably engaged in guides 26 made in a further block 27 fixed to the base 14.

The arms 25 are movable in the direction G and comprise a first end 28 fixed to the block 6 and a second end 29 arranged for rotatably supporting a second shaft 30 by forks 31.

The second shaft 30 is provided with two eccentric portions 32.

When the second shaft 30 is mounted on the arms 25 each eccentric portion 32 is situated in a zone comprised between the two ends 33 of each fork 31.

On each eccentric portion 32 there is mounted a roller 34, arranged for rolling on a corresponding shaped side surface 35 of second cams 36 of second cam means 37.

The second cams. 36 are fixed to a third shaft 38 rotated by further motor means that is not shown.

The movement means 20 comprises further spring means, which is not shown, arranged for maintaining the rollers 34 in contact with the shaped side surfaces 35.

The second cams 36, by rotating, move the arms 25 and the block 6 along the direction G according to a desired motion law determined by the shape of the shaped side surfaces 35. According to this motion law the block 6 is movable between a rest position **O,** shown in Figure 1, in which the block 6 is kept far from the portion 3a, and a further forming position R, shown in Figure 6, in which the block 6 comes into contact with the body 13 moving the block 6 to the forming position D.

Between the rest position O and the further forming position **R,** a further operating position **Q** is defined, which is visible in Figure 5, in which the block 6 is moved towards the body 13, such that the reserve-forming knives 8 can partially penetrate the first forming cavities 7. When the block 6 is in the further operating position Q, the body 13 is maintained by the spring means 16 in the operating position C.

Further, when the block 6 is in the further operating position Q and the reserve-forming knives 8 are in the advanced position B, there is defined a penetration depth J, shown in Figures 5 and 6 of the reserve-forming knives 8 in the first forming cavities 7.

Each reserve-forming knife 8 is arranged for pushing regions of the continuous web 3 inside the corresponding first forming cavities 7 so as to make a reserve of material inside the latter.

The reserve-forming knives 8 are moved by the cam means 17 one after the other as previously explained, such that all the reserves of material can be formed without the continuous web 3 being stretched.

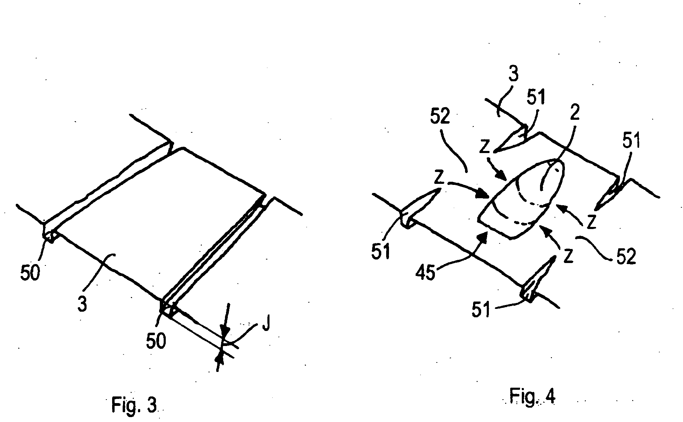

The reserves of material thus obtained in the continuous web 3 have a concave profile 50 shown in Figure 3.

When the block 6 is in the further forming position R, the body 13 is pushed by the block 6 into the forming position D and the punches **10** interact with the second forming cavities 9 to form the recesses 2.

A first part 52 of the material pushed by the reserve-forming knives 8 to form the reserves of material, shown in Figure 4, exits the first forming cavities and is dragged, as shown by the arrows Z in Figure 4, to forming zones 45 to enable the recesses 2 to be formed.

A second part 51 of the material pushed by the reserve-forming knives 8 to form the reserves of material is not dragged to the forming zones 45, being too far from the latter, and maintains the concave profile 50 even at the end of the forming process.

In this way the recesses 2 are shaped without subjecting the continuous web 3 to stress that could alter the features of the continuous web 3 or damage the continuous web 3.

In particular, excessively stretching the continuous web 3 is thereby avoided during forming of the recesses 2 and it is avoided that the latter tears.

The apparatus 1 further comprises adjusting means 40 arranged for adjusting the penetration depth J.

The penetration depth J in fact determines a width of the regions of the continuous web 3 that are pushed inside the first forming cavities 7 to obtain the reserves of material. For example, if the penetration depth J increases, the width of the regions of continuous web 3 that are pushed inside the first forming cavities 7 is greater.

The adjusting means 40 comprises an adjusting element 41, for example a dual-effect pneumatic cylinder.

The adjusting element 41 is provided with a first end portion 42 fixed to a bracket, not shown, made on the base 14 and a second end portion 43 rotatably connected to a connecting element 44.

The second end portion 43 can perform a stroke limited by the arresting element 46.

The latter is slidably engaged in a further guide 47.

The connecting element 44 is fixed to a central portion of the second shaft 30 so that a rotation of the second shaft around a longitudinal rotation axis thereof for an angular sector having a preset width corresponds to a variation of the stroke of the adjusting element 41.

In this way, a movement of the rollers 34 mounted on the eccentric portions 32 of the second shaft 30 is generated. This movement has a component in the direction G and causes an adjustment in the direction G of the positions that are reachable by the block 6, in particular of the further operating position Q.

This movement thus adjusts the penetration depth J and therefore the width of the regions pushed into the first forming cavities 7 to make the reserves of material.

The forming means 23 is made in such a way as to define a lower forming step of a printing step with which the print was made on the web 3.

The apparatus 1 further comprises sensor means 21 comprising a photocell 22 arranged for detecting a position of reference marks, printed on a surface 24 of the continuous web 3, during the forming of the recesses 2.

The photocell 22 is arranged upstream of the forming means 23 and detects the position of the reference marks of a further portion 3b moving towards the forming means 23.

The photocell 22 is connected to the control unit and sends to the latter a signal relating to a detected position of each reference mark.

On the basis of the detected position of each reference mark the control unit calculates a position of the further portion 3b.

The control unit further recognises a correct position that the further portion 3b has to occupy with precision to centre the print with respect to the recesses 2.

If the further portion 3b is in the correct position, in fact, the print, at the end of forming of the recesses 2, is in a desired position with respect to the latter.

The control unit processes the signal emitted by the photocell 22 and calculates a positioning error of the further portion 3b with respect to the correct position.

As the forming step is less than the printing step, each forming process causes a positioning error.

This positioning error causes the position occupied by the further portion 3a to be further from the forming means 23 with respect to the correct position.

At each forming process the positioning error increases.

When the positioning error of the further portion 3b is greater than a tolerated error, the control unit drives the adjusting means 40 on the basis of the positioning error calculated for returning the further portion 3b to the correct position.

In a first step of the forming process, shown in Figure 1, the block 6 is in the rest position O, the body 13 is in the operating position C and the reserve-forming knives 8 are in the retracted position A.

The actuating means moves the continuous web 3 in the advance direction F in such a way that the portion 3a to be formed is positioned between the block 6 and the body 13. Subsequently, as shown in Figure 5, in an operating step, the movement means 20 moves the block 6 to take it to the further operating position Q and the shaft 18 completes a revolution.

In this way the reserve-forming knives 8 are pushed by the first cams 19 into the advanced position B and are partially inserted one after the other inside the first forming cavities 7.

Thus, whilst the reserves of material are formed another portion of the continuous web 3 advances in the advance direction F and is recalled by the forming means 23.

The block 6 is in fact spaced apart from the body 13 and so the continuous web 3 can flow freely to enable the reserves of material to be formed.

After forming a corresponding reserve of material, each reserve-forming knife 8 remains in the advanced position B and loses contact with the corresponding first cam 19, thus remaining free to flow with respect to the respective seat 11.

Subsequently in a forming step, shown in Figure 6, the movement means 20 moves the block 6 to take the block 6 to the further forming position R.

The advancing block 6 blocks the continuous web 3 on the body 13 owing to two end zones 48 of the front surface 15 and pushes the body 13 into the forming position D.

The punches 10 partially emerge from the respective further seats 12 and push the continuous web 3 inside the corresponding second forming cavities 9 to form the recesses 2.

The first part 52 of the material pushed by the reserve-forming knives 8 to form the reserves of material exits the first forming cavities 7 and is dragged, as shown by the arrows Z in Figure 4, to the forming zones 45 to enable the recesses 2 to be formed.

The first part 52 of material that emerges pushes the reserve-forming knives 8 in such a way as to enable a return of the latter to the retracted position A.

In this way the reserve-forming knives 8 return to contact with the first cams 19.

The positioning error caused by the forming process is such that the position occupied by the further portion 3a is further from the forming means 23 than the correct position. This positioning error is detected by the sensor means 21. When the positioning error of the further portion 3b become greater than the tolerated error, the control unit drives the adjusting means 40.

In this way the width of she regions of continuous web 3 becomes greater that are pushed inside the first forming cavities 7 and the other portion of the continuous web 3 increases that is recalled by the forming means 23.

Owing to this, during the subsequent forming process, the further portion 3a advances, becoming positioned in the correct position and thus the positioning error is eliminated.

Thus the print, at the end of the subsequent forming process, is in the desired position compared with the recesses 2.

## Claims

1. Apparatus, comprising accumulating means (7, 8, 17, 40), for forming a plurality of loops (50) in a web (3) of sheet material such that said sheet material can slide away from said loops (50) during the forming of cavities; movement means (20) arranged for moving a block (6) in which cavities (7) are obtained; said accumulating means comprising laminar elements (8) that are movable between a retracted position (A) in which they are contained in respective seats (11) and an advanced position (B) in which said laminar elements (8) partially emerge from said seats (11); said block(6) being movable by means of said movement means (20) between a rest position (O), in which said block (6) is kept far from said web (3) and an operating position (Q) in which said laminar elements (8) in said advanced position (B) partially penetrate said cavities (7), such that there is defined a penetration depth (J) of said laminar elements (8) in said cavities (7); wherein said accumulating means (7, 8, 17, 40) comprises adjusting means (40) arranged for varying said penetration depth (J) of said laminar elements (8) in said cavities (7) in said advanced position (B), **characterised in that** said apparatus further comprises sensor means (21) arranged upstream of said accumulation means (7, 8, 17, 40) for detecting a position of reference marks of a portion (3b) printed on a surface (24) of said web (3); a control unit connected to said sensor means (21) for receiving a signal from said sensor means related to said detected position of each reference mark; said signal being processable by said control unit to calculate a positioning error of said portion (3b) with respect to a correct position; and wherein said adjusting means (40) is drivable during the operating step by said control unit when said positioning error is greater of a tolerated error, to adjust the position reachable by said block (6) in said operating position such that said penetration depth (J) and therefore a width of said web in said cavities (7) to make said loops (50) is adjusted, for drawing a greater or lesser quantity of sheet material from a supplying station.

2. Apparatus according to claim 1, wherein between said block (6) and said movement means (20) there is interposed a shaft (30) with eccentric portions (32) acting as a sensitive element of said adjusting means (40).

3. Apparatus according to claim 2, wherein said shaft (30) is provided with a lever (44) that is coupled with an adjusting element (41) that enables said shaft (30) to be rotated by a preset angular sector around said eccentric portions (32).

4. Apparatus according to claim 2 or 3, wherein said eccentric portions (32) are rotatably supported on arms (25, 28, 29, 31) arranged for driving said block (6).

5. Apparatus according to claim 4, wherein on said eccentric portions (32) rollers (34) are mounted that are driven by cams (36) having a profile (35) such as to move said block (6) from said rest position (O) to a forming position (R).

6. Method comprising unwinding by steps a web (3) of sheet material from a supplying station, forming a plurality of loops (50) in said web of sheet material so as to define in said material accumulating zones, substantially reducing said loops (50) during the forming of cavities, **characterised in that** said forming comprises varying a dimension of at least one of said loops (50) during the operating step in such a way that said accumulating zones can draw a greater or lesser quantity of said sheet material from said supplying station.

7. Method according to claim 6, wherein said varying is obtained by rotating a sensitive member (30) of an adjusting means (40) around a longitudinal axis.

8. Method according to claim 7, wherein said rotating comprises angularly moving a shaft (30) around eccentric portions (32) thereof.

9. Method according to any one of claims 6 to 8, and further comprising providing print centring notches arranged according to a linear step on said sheet material that is greater than a forming step or than a multiple thereof.

## Patentansprüche

1. Vorrichtung mit einem Akkumulierungsmittel (7, 8, 17, 40) zum Ausbilden einer Mehrzahl von Krümmungen (50) in einer Bahn (3) eines Flachmaterials, so dass das Flachmaterial von den Krümmungen (50) während des Ausbildens von Hohlräumen weggleiten kann; einem Bewegungsmittel (20), das dazu angeordnet ist, einen Block (6), in dem Hohlräume (7) erlangt werden, zu bewegen; wobei das Akkumulierungsmittel laminare Elemente (8) aufweist, die zwischen einer zurückgezogenen Position (A) in der sie in entsprechenden Sitzen (11) zurückgehalten sind, und einer vorgerückten Position (B), in der die laminaren Elemente (8) teilweise von den Sitzen (11) vorstehen, bewegbar sind; wobei der Block (6) mittels des Bewegungsmittels (20) zwischen einer Ruheposition (O), in der der Block (6) weg von der Bahn (3) gehalten ist, und einer Betriebsposition (Q), in der die laminaren Elemente (8) in der vorgerückten Position (B) teilweise in die Hohlräume (7) eintreten, bewegbar ist, so dass eine Eindringtiefe (J) der laminaren Elemente (8) in die Hohlräume (7) definiert ist; wobei das Akkumulierungsmittel (7, 8, 17, 40) ein Einstellmittel (40) aufweist, das dazu angeordnet ist, die Eindringtiefe (J) der laminaren Elemente (8) in die Hohlräume (7) in der vorgerückten Position (B) zu variieren, **dadurch gekennzeichnet, dass** die Vorrichtung des Weiteren ein Sensormittel (21) aufweist, das stromaufwärts des Akkumulierungsmittels (7, 8, 17, 40) angeordnet ist, um eine Position von Referenzmarkierungen eines Abschnitts (3b) zu erfassen, die auf einer Oberfläche (24) der Bahn (3) gedruckt sind; wobei eine Regelungseinheit, die mit dem Sensormittel (21) verbunden ist, um ein Signal von dem Sensormittel zu empfangen, das auf die erfasste Position von jeder Referenzmarkierung bezogen ist; wobei das Signal durch die Regelungseinheit auswertbar ist, um einen Positionierungsfehler des Abschnitts (3b) in Bezug auf eine korrekte Position zu berechnen; und wobei das Einstellmittel (40) während des Betriebsschritts durch die Regelungseinheit antreibbar ist, wenn der Positionierungsfehler größer als ein tolerierter Fehler ist, um die Position, die durch den Block (6) in der Betriebsposition erreichbar ist, einzustellen, so dass die Eindringtiefe (J) und daher eine Breite der Bahn in den Hohlräumen (7), um die Krümmungen (50) herzustellen, eingestellt ist, um eine größere oder geringere Menge von Flachmaterial von einer Zuführstation abzuziehen.

2. Vorrichtung nach Anspruch 1, wobei zwischen dem Block (6) und dem Bewegungsmittel (20) eine Welle (30) mit exzentrischen Abschnitten (32) eingeschoben ist, die als ein sensibles Element des Einstellmittels (40) dient.

3. Vorrichtung nach Anspruch 2, wobei die Welle (30) mit einem Hebel (44) versehen ist, der mit einem Einstellelement (41) gekoppelt ist, das der Welle (30) ermöglicht, um einen vorbestimmten Winkelabschnitt um die exzentrischen Abschnitte (32) rotiert zu werden.

4. Vorrichtung nach Anspruch 2 oder 3, wobei die exzentrischen Abschnitte (32) rotierbar auf Armen (25, 28, 29, 31) gestützt sind, die zum Antreiben des Blocks (6) angeordnet sind.

5. Vorrichtung nach Anspruch 4, wobei auf den exzentrischen Abschnitten (32) Rollenelemente (34) montiert sind, die durch Nocken (36), die ein Profil (35) aufweisen, angetrieben sind, um den Block (6) von der Ruheposition (0) zu einer Ausformungsposition (R) zu bewegen.

6. Verfahren, das die Schritte eines schrittweisen Abwickelns einer Bahn (3) eines Flachmaterials von einer Zuführstation, des Ausbildens einer Mehrzahl von Krümmungen (50) in der Bahn des Flachmaterials, um in dem Material Akkumulationszonen zu definieren, und des wesentlichen Reduzierens der Krümmungen (50) während des Ausbildens von Hohlräumen aufweist, **dadurch gekennzeichnet, dass** das Ausbilden das Variieren einer Dimension von zumindest einer der Krümmungen (50) während des Betriebsschritts derart aufweist, dass die Akkumulationszonen eine größere oder kleinere Menge des Flachmaterials von der Zuführstation abziehen können.

7. Verfahren nach Anspruch 6, wobei das Variieren durch Rotieren eines sensiblen Elements (30) eines Einstellmittels (40) um eine longitudinale Achse erzielt wird.

8. Verfahren nach Anspruch 7, wobei das Rotieren ein Drehbewegen einer Welle (30) um exzentrische Abschnitte (32) von sich aufweist.

9. Verfahren nach einem der Ansprüche 6 bis 8, des Weiteren mit dem Schritt des Bereitstellens von Druckzentrierungsaussparungen aufweist, die gemäß einem linearen Schritt auf dem Flachmaterial angeordnet sind, der größer als ein Ausformungsschritt oder eine Mehrzahl davon ist.

## Revendications

1. Dispositif, comprenant des moyens accumulateurs (7, 8, 17, 40), destinés à former une pluralité de boucles (50) dans une bande (3) de matériau en feuille de telle sorte que ledit matériau en feuille puisse glisser via lesdites boucles (50) pendant la formation de cavités; des moyens de déplacement (20) agencés de façon à déplacer un bloc (6) dans lequel des cavités (7) sont obtenues; lesdits moyens accumulateurs comprenant des éléments laminaires (8) qui sont mobiles entre une position rentrée (A) dans laquelle ils sont contenus dans des sièges respectifs (11) et une position avancée (B) dans laquelle lesdits éléments laminaires (8) émergent en partie desdits sièges (11); ledit bloc (6) étant mobile grâce auxdits moyens de déplacement (20) entre une position de repos (O), dans laquelle ledit bloc (6) est maintenu éloigné de ladite bande (3) et une position de fonctionnement (Q) dans laquelle lesdits éléments laminaires (8) dans ladite position avancée (B) pénètrent en partie dans lesdites cavités (7), de façon à définir une profondeur de pénétration (J) desdits éléments laminaires (8) dans lesdites cavités (7); dans lequel lesdits moyens accumulateurs (7, 8, 17, 40) comprennent des moyens de réglage (40) agencés de façon à faire varier ladite profondeur de pénétration (J) desdits éléments laminaires (8) dans lesdites cavités (7) dans ladite position avancée (B), ***caractérisé en ce que*** ledit dispositif comprend en outre des moyens formant détecteur (21) agencés en amont desdits moyens accumulateurs (7, 8, 17, 40) pour détecter une position de repères de référence d'une partie (3b) imprimée sur une surface (24) de ladite bande (3); une unité de commande raccordée auxdits moyens formant détecteur (21) destinée à recevoir un signal, en provenance desdits moyens formant détecteur, qui se rapporte à ladite position détectée de chaque repère de référence; ledit signal pouvant être traité par ladite unité de commande pour calculer une erreur de positionnement de ladite partie (3b) par rapport à une position correcte; et dans lequel lesdits moyens de réglage (40) peuvent être pilotés au cours de l'étape de fonctionnement par ladite unité de commande lorsque ladite erreur de positionnement est supérieure à une erreur tolérée, de manière à régler la position que peut atteindre ledit bloc (6) dans ladite position de fonctionnement pour régler ladite profondeur de pénétration (J) et par conséquent une largeur de ladite bande dans lesdites cavités (7) pour réaliser lesdites boucles (50), de façon à extraire une quantité plus ou moins grande de matériau en feuille en provenance d'un poste d'alimentation.

2. Dispositif selon la revendication 1, dans lequel un arbre (30) qui présente des parties excentriques (32) qui agissent en tant qu'élément de détection desdits moyens de réglage (40), est interposé entre ledit bloc (6) et lesdits moyens de déplacement (20).

3. Dispositif selon la revendication 2, dans lequel ledit arbre (30) est doté d'un levier (44) qui est couplé à un élément de réglage (41) qui permet de faire tourner ledit arbre (30) d'un secteur angulaire préréglé autour desdites parties excentriques (32).

4. Dispositif selon la revendication 2 ou 3, dans lequel lesdites parties excentriques (32) sont supportées en rotation sur des bras (25, 28, 29, 31) agencés de façon à entraîner ledit bloc (6).

5. Dispositif selon la revendication 4, dans lequel, sur lesdites parties excentriques (32), sont montés des galets (34) qui sont entraînés par des cames (36) qui présentent un profil (35) propre à déplacer ledit bloc (6) de ladite position de repos (O) jusqu'à une position de formation (R).

6. Procédé comprenant les étapes consistant à: dérouler par étapes une bande (3) de matériau en feuille en provenance d'un poste d'alimentation; former une pluralité de boucles (50) dans ladite bande de matériau en feuille de façon à définir dans ledit matériau des zones d'accumulation; réduire sensiblement lesdites boucles (50) pendant la formation de cavités, ***caractérisé en ce que*** ladite étape de formation comprend une étape de modification d'une dimension de l'une au moins desdites boucles (50) pendant l'étape de fonctionnement de telle façon que lesdites zones d'accumulation puissent extraire une quantité plus ou moins grande dudit matériau en feuille à partir dudit poste d'alimentation.

7. Procédé selon la revendication 6, dans lequel ladite modification est obtenue en faisant tourner un élément de détection (30) de moyens de réglage (40) autour d'un axe longitudinal.

8. Procédé selon la revendication 7, dans lequel ladite rotation comprend un déplacement angulaire d'un arbre (30) autour de parties excentriques (32) de celui-ci.

9. Procédé selon l'une quelconque des revendications 6 à 8, comprenant en outre une étape consistant à prévoir des encoches de centrage d'impression placées selon un écartement linéaire sur ledit matériau en feuille qui est supérieur à un écartement de formation ou à un multiple de celui-ci.
